(19) Europäisches Patentamt / European Patent Office / Office européen des brevets

(11) **EP 3 863 164 A1**

(12) **EUROPÄISCHE PATENTANMELDUNG**

(43) Veröffentlichungstag:
**11.08.2021 Patentblatt 2021/32**

(51) Int Cl.:
*H02K 15/16* (2006.01)        *H02K 1/18* (2006.01)
*H02K 1/14* (2006.01)

(21) Anmeldenummer: **21155404.3**

(22) Anmeldetag: **05.02.2021**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **07.02.2020 DE 102020103231**

(71) Anmelder: **Rheinisch-Westfälische Technische Hochschule (RWTH) Aachen
52056 Aachen (DE)**

(72) Erfinder:
• **REIMERS, Jan-Dirk
52074 Aachen (DE)**
• **BERTHOLD, Tobias
52355 Düren Lendersdorf (DE)**
• **DE DONCKER, Rik
52074 Aachen (DE)**

(74) Vertreter: **Michalski Hüttermann & Partner
Patentanwälte mbB
Speditionstraße 21
40221 Düsseldorf (DE)**

(54) **EINSTELLEINRICHTUNG UND VERFAHREN ZUM EINSTELLEN EINES RADIALEN LUFTSPALT-ABSTANDES BEI EINER ELEKTRISCHEN MASCHINE**

(57) Die Erfindung betrifft eine Einstelleinrichtung (34) zum Einstellen eines radialen Luftspalt-Abstandes zwischen einem Stator (16) und einem eine Rotationsachse (18) aufweisenden Rotor (14) einer elektrischen Maschine (10), mit Exzentervorrichtungen (36, 38, 40, 42), über die die Lage des Stators (16) oder einzelner Statorkomponenten (26, 28) des Stators (16) bezüglich mindestens einer maschinenfesten Komponente (24) der elektrischen Maschine (10) justierbar ist. Es ist vorgesehen, dass die Einstelleinrichtung (34) derart eingerichtet ist, dass die Lage eines auf eine mit der Rotationsachse (18) korrespondierende Hauptachse (20) des Stators (16) oder der Statorkomponenten (26, 28) bezogenen und den Luftspalt (52) begrenzenden Statorumfangs mittels der Exzentervorrichtungen (36, 38, 40, 42) einstellbar ist.

Die Erfindung betrifft weiterhin eine entsprechende elektrische Maschine (10) und ein entsprechendes Verfahren zum radialen Einstellen eines Luftspalt-Abstandes zwischen einem Stator (16) und einem Rotor (14) einer derartigen elektrischen Maschine (10).

Fig. 1

EP 3 863 164 A1

## Beschreibung

Die Erfindung betrifft eine Einstelleinrichtung zum Einstellen eines radialen Luftspalt-Abstandes zwischen einem Stator und einem eine Rotationsachse aufweisenden Rotor einer elektrischen Maschine, mit Exzentervorrichtungen, über die die Lage des Stators oder einzelner Statorkomponenten des Stators bezüglich mindestens einer maschinenfesten Komponente der elektrischen Maschine justierbar ist.

Die Erfindung betrifft weiterhin eine entsprechende elektrische Maschine mit einem Rotor (auch Läufer genannt), der eine Rotationsachse aufweist, einem Stator (auch Ständer genannt), der eine mit der Rotationsachse korrespondierende Hauptachse aufweist, mindestens einer maschinenfesten Komponente und einer Einstelleinrichtung zum Einstellen eines radialen Luftspalt-Abstandes zwischen dem Stator und dem Rotor, die Exzentervorrichtungen aufweist, über die die Lage des Stators oder einzelner Statorkomponenten des Stators bezüglich der mindestens einen maschinenfesten Komponente justierbar ist.

Als Luftspalt wird in der Elektrotechnik im Rahmen magnetischer Kreise der Raum oder Abstand zwischen zwei gegenüberliegenden Flächen bezeichnet, welche einen magnetischen Fluss führen. Ein typisches Beispiel ist der hier betrachtete Luftspalt zwischen Rotor und Stator bzw. Rotor- und Statorkomponenten einer elektrischen Maschine wie einem Elektromotor oder einem Generator. Der Luftspalt einer elektrischen Maschine ist entscheidend für die grundsätzliche Auslegung und Erfüllung der Funktion der elektrischen Maschine.

Bei einer Innenläufer-Maschine wird der Luftspalt vom Stator-Innenumfang und dem Rotor-Außenumfang begrenzt und bei einer Außenläufer-Maschine wird der Luftspalt vom Rotor-Innenumfang und dem Stator-Außenumfang begrenzt.

Grundsätzlich ist eine elektrische Maschine mit kleinerem Luftspalt bezüglich Leistungsdichte, Wirkungsgrad, Streufluss besser als eine mit größerem Luftspalt. Die Fertigungstechnik bedingt je nach deren Auswahl jedoch Toleranzen, die zusätzlich zu den thermischen Längenänderungen und verformungsbedingten Maßänderungen während des Betriebes beachtet werden müssen. Diese additiven Toleranzen müssen auf einen virtuellen, minimalen Luftspalt aufaddiert werden, womit sich ein real erreichbarer Luftspalt ergibt, den es zu minimieren gilt. Diese Toleranzoptimierung betrifft die Verformung, den Wärmegang und die grundsätzliche Fertigungstechnik der Herstellung der Bauteile und Baugruppen.

Bei der grundsätzlichen Auslegung von elektrischen Maschinen kommen diverse gegensätzliche Anforderungen innerhalb eines Maschinenentwurfs zusammen. Ein in der Literatur zumindest in Bezug zur allgemeinem Auslegungsempfehlung recht wenig behandelter Wert ist der Luftspaltabstand. Dieser Wert ist sehr kontrovers zwischen theoretischer Auslegung und realer Abbildung in der Maschine zu sehen. Grundsätzlich ist immer ein kleiner Luftspalt zu bevorzugen. Dies betrifft insbesondere Synchron-Reluktanzmaschinen. Maschinen nach dem Lorenzprinzip sind hier weniger empfindlich gegenüber einem größeren Luftspalt als es Reluktanzmaschinen sind. Der Luftspalt hat neben seiner maßlich geringen Ausführung zudem über den Umfang und absolut gesehen eine hohe Konstanz zu haben.

Die Thermik innerhalb der elektrischen Maschine führt zu thermisch bedingten Längenänderungen währen des Betriebs der Maschine (Wärmegang). Der Wärmegang kann negative Auswirkungen auf die Lagerluft, die radiale Vorspannung und auch den Luftspaltabstand haben. Der thermische Wärmegang darf nicht zu einem mit kraftbedingten Verformungen überlagerten Anschlagen des Rotors an den Stator führen. Hier ist unter Berücksichtigung der zusätzlichen Fertigungstoleranzen und Toleranzketten in der Maschine ein Mindestluftspalt berechenbar, der unter allen Umständen nicht unterschritten werden darf.

Es ergibt sich damit abhängig von der Auslegung und von der Fertigungstechnik ein Toleranzbereich zwischen minimal gefordertem und maximal toleriertem Luftspaltabstand innerhalb der elektrischen Maschine zwischen Stator und Rotor bzw. entsprechenden Stator- und Rotorelementen. Hier ist der minimal geforderte Luftspaltabstand in seiner technologischen erreichbaren Größenordnung weitgehend kostenspezifisch definierbar. Enge Toleranzen kosten schlichtweg aufgrund der teureren Fertigungsverfahren mehr Geld als größere Toleranzen. Größere Toleranzen sind kostenspezifisch immer vorzuziehen. Jedoch lassen größere Luftspalte durch einen höheren Materialeinsatz die Kosten ebenfalls wieder steigen. Es bleibt das Problem, dass der Luftspalt klein und mit geringen Toleranzen behaftet sein muss.

Hier lassen sich auch Serienfertigung und Prototypenfertigung unterscheiden, eine technologische Lösung innerhalb des Prototypenbaus ist nicht immer für den späteren Serienbau geeignet und umgekehrt. So müssen vielfältig heute Prototypenmaschinen erprobt werden, wie sie später nicht gebaut werden würden. Dies erschwert den Entwicklungsprozess zusätzlich. Aus diesem Grund besteht das Problem den Luftspalt einer Maschine mit einem kleinen Basisabstand und gleichzeitig sehr engen Luftspalttoleranzen einstellen zu können, ohne das die Fertigung der Komponenten der Maschine aufgrund der engen Toleranzanforderungen zusätzlich verteuert wird.

Eine der wenigen dokumentierten Luftspalt-maßvorgaben besagt:

$$\text{Luftspalt} = 0{,}2 + (0{,}01 \text{ bis } 0{,}02) * D\,\text{Rotor},$$

wobei ein Toleranzbereich von 10% des Luftspalts als üblicherweise tolerierbar angenommen wird. Die würde heißen, dass eine elektrische Maschine mit 0,150 m Rotordurchmesser zwischen 0,35 und 0,5 mm Luftspalt aufweisen sollte. Sie sollte eine Luftspalttoleranz von 0,035 bis 0,05 mm einhalten.

Eine elektrische Maschine 10 mit 400 mm Luftspaltdurchmesser sollte einen Luftspalt von 0,6 mm bis 1 mm aufweisen. Dies entspricht einer Luftspalttoleranz bei 10% von im Mittel 0,08 mm, was bei einem Nenndurchmesser von 400 mm einer Toleranzklasse ISO Klasse 6 für die beiden Bauteile Rotorblech und Statorblech entsprechen würde, ohne dass weitere Toleranzen aus der Montagekette berücksichtigt werden würden. Genau genommen ist dies bereits mit der Lagerluft und der Außengeometrietoleranz der Elektroblechteile schon erreicht. Hinzu kommen Toleranzketten aus dem gesamten Montagebereich der Einzelkomponenten. Die Bauteile müssen in Summe eine erhebliche Genauigkeit aufweisen.

Weiterhin ist neben der Rundheitstoleranz der gesamten Bauteile zusätzlich mit einer Mittentoleranz der Bauteile zu rechnen. Beides überlagert sich und führt zu einem umlaufend konzentrischen Luftspalt, der sich bevorzugt an der engsten Stelle durch seine asymmetrische Magnetkraft zusätzlich bei langen schlanken Wellen verkleinern kann, da sich die Welle elastisch verformen kann.

Die Druckschrift EP 2 960 530 A1 beschreibt eine elektrische Maschine mit einem Rotor, einem Stator, einer Statorplatte als maschinenfesten Komponente und einer Einstelleinrichtung zum Einstellen eines radialen Luftspalt-Abstandes zwischen dem Stator und dem Rotor der elektrischen Maschine, welche Exzentervorrichtungen aufweist, über die die Lage einzelner Statorkomponenten des Stators bezüglich der maschinenfesten Komponente justierbar ist. Dabei können die einzelnen Statorkomponenten mittels der Exzentervorrichtungen bezüglich einer in der elektrischen Maschine vorgegebenen Hauptachse des Stators radial verlagert werden, wodurch sich auch der radiale Luftspalt-Abstand zwischen dem Stator und dem Rotor ändert.

Es ist Aufgabe der Erfindung Maßnahmen bereitzustellen mittels derer ein möglichst genaues Einstellen des Luftspaltabstandes bei montierter elektrischer Maschine, also ein Nachstellen diese Abstandes bei der elektrischen Maschine, auf relativ einfache Weise möglich ist.

Die Lösung der Aufgabe erfolgt erfindungsgemäß durch die Merkmale der unabhängigen Ansprüche. Bevorzugte Ausgestaltungen der Erfindung sind in den Unteransprüchen angegeben, die jeweils einzeln oder in Kombination einen Aspekt der Erfindung darstellen können.

Bei der erfindungsgemäßen Einstelleinrichtung zum Einstellen eines radialen Luftspalt-Abstandes zwischen einem Stator und einem eine Rotationsachse aufweisenden Rotor einer elektrischen Maschine, welche Exzentervorrichtungen aufweist, über die die Lage des Stators oder einzelner Statorkomponenten des Stators bezüglich mindestens einer maschinenfesten Komponente der elektrischen Maschine justierbar ist, ist vorgesehen, dass die Einstelleinrichtung derart eingerichtet ist, dass die Lage eines auf eine mit der Rotationsachse korrespondierende Hauptachse des Stators oder der Statorkomponenten bezogenen und den Luftspalt begrenzenden Statorumfangs mittels der Exzentervorrichtungen einstellbar ist.

Anders als bei der in der EP 2 960 530 A1 beschriebenen Einstelleinrichtung zum Einstellen eines radialen Luftspalt-Abstandes zwischen dem Stator und dem Rotor der elektrischen Maschine kann bei der erfindungsgemäßen Einstelleinrichtung also die Hauptachse des Stators gegenüber einer Drehachse des Rotors verlagert (insbesondere parallelverschoben) werden, sodass auch die Lage des auf diese Hauptachse des Stators bezogenen und den Luftspalt begrenzenden Statorumfangs mittels der Exzentervorrichtungen einstellbar ist. Bei einem aus (einer) einzelnen Statorkomponente bzw. aus einzelnen Statorkomponenten zusammengesetzten Stator wird die den Statorumfang bestimmende Statorkomponente / werden die den Statorumfang bestimmenden Statorkomponenten beim Einstellen des radialen Luftspalt-Abstandes entsprechend verkippt, was bei der in der EP 2 960 530 A1 beschriebenen elektrischen Maschine aufgrund der Konstruktion der Einstelleinrichtung nicht möglich ist. Sollten die genannten Achsen (Dreh- und Hauptachse) also beim Zusammenbau nicht automatisch aufeinander fallen, so ermöglicht die erfindungsgemäße Einstelleinrichtung nun eine entsprechende Lage-Korrektur der Hauptachse des Stators, während die in der EP 2 960 530 A1 beschriebene Einstelleinrichtung "nur" eine Anpassung des Radius der statorseitigen Umfangsbegrenzung des Luftspalts bei der jeweiligen Statorkomponente erlaubt.

Die Nutzung der erfindungsgemäßen Einstelleinrichtung zum Einstellen des radialen Luftspalt-Abstandes ist dabei insbesondere für Synchron-Reluktanzmaschinen vorgesehen. Bei dieser Art von elektrischer Maschine ist ein präzise eingestellter, möglichst geringer radialer Luftspalt-Abstand besonders wichtig.

Gemäß einer bevorzugten Ausgestaltung der Erfindung ist vorgesehen, dass pro einzelne Statorkomponente mindestens zwei der Exzentervorrichtungen vorgesehen sind. Dabei ist dann der Stator oder jede der einzelnen Statorkomponenten zum Einstellen des radialen Luftspalt-Abstandes über mindestens zwei der Exzentervorrichtungen mit der mindestens einen maschinenfesten Komponente bezüglich seiner/ihrer Lage justierbar verbunden. Auf diese Weise ist das bereits angesprochene Verkippen realisierbar.

Mit Vorteil ist vorgesehen, dass jede der Exzentervorrichtungen eine Exzenterhülse sowie einen Exzenterstift aufweist. Die Längsachse des Exzenterstifts und die Längsachse der Exzenterhülse verlaufen parallel, sind jedoch beabstandet voneinander. Ein solcher Aufbau ist bekannt (z.B. aus der eingangs genannten Druckschrift EP 2 960 530 A1) und hat sich in der Praxis bewährt.

Dabei ist insbesondere vorgesehen, dass jede der Exzenterhülsen ein Antriebsprofil aufweist, welches insbesondere als Sechskant ausgebildet ist. Über das Antriebsprofil kann die Exzenterhülse gedreht und somit die Exzentervorrichtung betätigt werden.

Bei der erfindungsgemäßen elektrischen Maschine mit einem Rotor, der eine Rotationsachse aufweist, einem Stator, der eine mit der Rotationsachse korrespondierende Hauptachse aufweist, mindestens einer maschinenfesten Komponente und einer Einstelleinrichtung zum Einstellen eines radialen Luftspalt-Abstandes zwischen dem Stator und dem Rotor, die Exzentervorrichtungen aufweist, über die die Lage des Stators oder einzelner Statorkomponenten des Stators bezüglich der mindestens einen maschinenfesten Komponente justierbar ist, ist vorgesehen, dass die Einstelleinrichtung als vorstehend genannte Einstelleinrichtung ausgebildet ist. Mit anderen Worten ist die Einstelleinrichtung derart eingerichtet, dass die Lage eines auf eine Hauptachse des Stators bezogenen und den Luftspalt begrenzenden Statorumfangs mittels der Exzentervorrichtungen einstellbar ist. Der Statorumfang ist dabei - je nachdem ob es sich um eine Innen- oder Außenläufermaschine handelt - ein Stator-Innenumfang oder ein Stator-Außenumfang.

Gemäß einer bevorzugten Ausführungsform der erfindungsgemäßen elektrischen Maschine ist vorgesehen, dass der Stator oder jede der einzelnen Statorkomponenten zum Einstellen des radialen Luftspalt-Abstandes über mindestens zwei der Exzentervorrichtungen mit der mindestens einen maschinenfesten Komponente bezüglich seiner/ihrer Lage justierbar verbunden ist.

Mit Vorteil ist vorgesehen, dass mindestens eine der maschinenfesten Komponenten eine gehäusefeste Komponente, insbesondere ein Gehäuseelement eines Gehäuses, der elektrischen Maschine ist.

Gemäß einer weiteren bevorzugten Ausführungsform der erfindungsgemäßen elektrischen Maschine sind die Statorkomponenten Statorsegmente des Stators der segmentierten elektrischen Maschine. Bei einem Stator mit Statorzähnen weist dann jedes der Statorsegmente einen oder mehrere der Statorzähne auf.

Gemäß noch einer weiteren bevorzugten Ausführungsform der erfindungsgemäßen elektrischen Maschine weist diese zwei oder mehr maschinenfeste Komponenten auf, wobei eine dieser maschinenfesten Komponenten auf einer Seite und eine andere dieser maschinenfesten Komponenten auf der dieser einen Seite gegenüberliegenden anderen Seite des Stators angeordnet ist und der Stator oder jede der einzelnen Statorkomponenten zum Einstellen des radialen Luftspalt-Abstandes über mindestens eine als Doppel-Exzentervorrichtung ausgebildete Exzentervorrichtung mit jeder dieser beiden maschinenfesten Komponente bezüglich seiner/ihrer Lage justierbar verbunden ist.

Schließlich ist bezüglich der elektrischen Maschine mit Vorteil vorgesehen, dass die elektrische Maschine eine Innenläufer-Maschine und der Statorumfang ein Stator-Innenumfang oder die elektrische Maschine eine Außenläufer-Maschine und der der Statorumfang ein Stator-Außenumfang ist.

Bei dem erfindungsgemäßen Verfahren zum radialen Einstellen eines Luftspaltabstandes zwischen einem Stator und einem Rotor einer vorstehend genannten elektrischen Maschine ist vorgesehen, dass der radiale Luftspaltabstand zwischen dem Stator und dem Rotor über die Einstelleinrichtung zum Einstellen eines radialen Luftspalt-Abstandes, genauer gesagt über deren Exzentervorrichtungen, eingestellt wird.

Nachfolgend wird die Erfindung unter Bezugnahme auf die anliegenden Zeichnungen anhand von bevorzugten Ausführungsbeispielen exemplarisch erläutert, wobei die nachfolgend dargestellten Merkmale sowohl jeweils einzeln als auch in Kombination einen Aspekt der Erfindung darstellen können. Es zeigen:

Fig. 1 eine schematische Darstellung einer elektrischen Maschine gemäß einer bevorzugten Ausgestaltung der Erfindung,

Fig. 2 eine Exzentervorrichtung gemäß einer bevorzugten Ausgestaltung der Erfindung mit Exzenterstift und Exzenterhülsen im beidseitigen Gehäuseeingriff,

Fig. 3 die Exzentervorrichtung der Fig. 2 in einer Detailabbildung und

Fig. 4 die Exzenterhülse in einer Detailabbildung,

Fig. 5 eine Statorkomponente und zwei zugehörige Exzentervorrichtungen einer Einstelleinrichtung gemäß einer bevorzugten Ausführungsform der Erfindung,

Fig. 6 Einstellmöglichkeiten bei der in Fig. 5 gezeigten Statorkomponente,

Fig. 7 weitere Einstellmöglichkeiten bei der in Fig. 5 gezeigten Statorkomponente

Fig. 8 einen Schnitt durch die Statorkomponente und eine der Exzentervorrichtungen der Fig. 5,

Fig. 9 die Einstellmöglichkeiten der Fig. 6 bei beidseitiger Lagerung der Statorkomponente über die Exzentervorrichtungen und

Fig. 10 die weiteren Einstellmöglichkeiten der Fig. 7 bei beidseitiger Lagerung der Statorkomponente über die Exzentervorrichtungen.

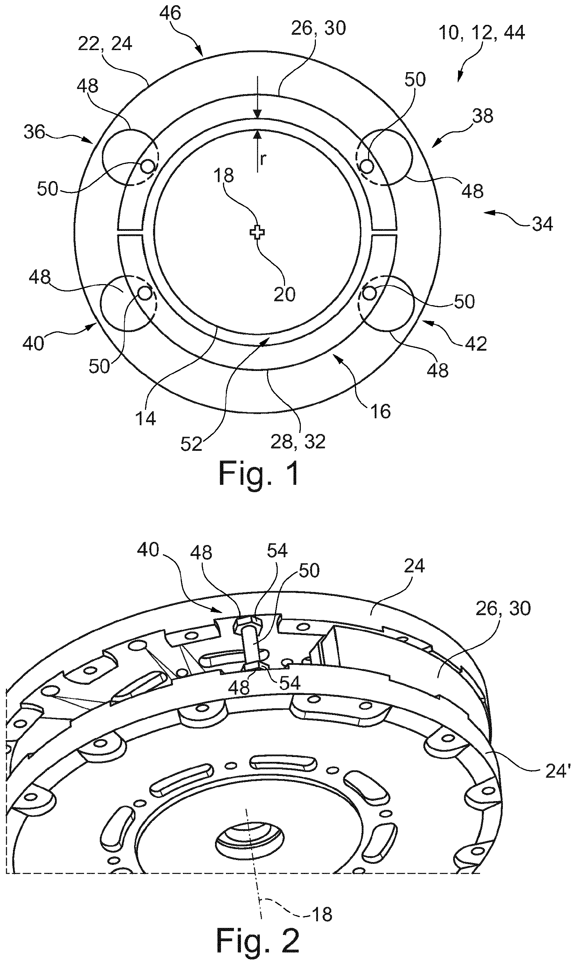

Die Fig. 1 zeigt in einer schematischen Darstellung eine elektrische Maschine 10, die als segmentierte elektrische Maschine 12 ausgebildet ist. Die elektrische Maschine 10 umfasst einen Rotor 14 mit einer zugehörigen Rotationsachse 16, einen Stator 18, für den sich eine mit der Rotationsachse 16 korrespondierende Hauptachse 20 des Stators 18 ergibt, und eine im Beispiel als Statorplatte 22 ausgebildete maschinenfeste Komponente 24. Der Stator 18 besteht im gezeigten Beispiel aus zwei Statorkomponenten 26, 28, die die Form eines Kreisbogens haben und sich zu dem ringförmigen Stator 18 ergänzen. Die hier gezeigten Statorkomponenten 26, 28 können auch als Statorsegmente 30, 32 bezeichnet werden, weswegen die elektrische Maschine 10 eine segmentierte elektrische Maschine 12 ist. In der Praxis ist - anders als bei dieser rein schematischen Darstellung der Fig. 1 - oft eine Vielzahl von Statorsegmenten 30, 32 vorgesehen, die jeweils nur einen Bruchteil des Vollkreises ausmachen.

Die elektrische Maschine 10 umfasst weiterhin ein Einstellsystem bzw. eine Einstelleinrichtung 34 zum Einstellen eines radialen Luftspalt-Abstandes r zwischen dem Stator 18 und dem Rotor 14, welche Exzentervorrichtungen 36, 38 40, 42 aufweist, über die die Lage der einzelner Statorkomponenten 26, 28 des Stators 18 bezüglich der maschinenfesten Komponente 24 der elektrischen Maschine 10 justierbar ist. Die hier gezeigte elektrische Maschine 10 ist eine Innenläufer-Maschine 44. Die maschinenfeste Komponente 34 ist beispielsweise ein Gehäuseelement eines Gehäuses 46 der elektrischen Maschine 10. Das Gehäuse 46 haust den Rotor 14 und den Stator 16 vollständig oder zumindest teilweise ein.

Jede der Exzentervorrichtungen 36, 38, 40, 42 weist eine Exzenterhülse 48 sowie einen Exzenterstift 50 auf. Die Längsachse des Exzenterstifts 50 und die Längsachse der Exzenterhülse 48 verlaufen parallel, sind jedoch beabstandet voneinander. Hier im Beispiel ist die Exzenterhülse 48 an der maschinenfesten Komponente 24 angeordnet und der Exzenterstift 50 greift in die jeweilige Statorkomponente 26, 28 ein. In einer anderen Ausgestaltung könnte die Exzenterhülse 48 an der jeweiligen Statorkomponente 26, 28 angeordnet sein und der Exzenterstift 50 greift in die maschinenfesten Komponente 24 ein. Die Betätigung der jeweiligen Exzentervorrichtung 36, 38, 40, 42 erfolgt durch Drehen der jeweiligen Exzenterhülse 48. Die entsprechende Bewegung ist also eine reine Drehbewegung. Der sich einstellende Spalt zwischen Rotor 14 und Stator 16 wird Luftspalt 52 genannt.

Die Exzentervorrichtungen 36, 38 40, 42 der Einstelleinrichtung 34 bewirken eine Einstellbarkeit der Lage des Stators 18 relativ zur Mittenposition der elektrischen Maschine 10 bzw. der Rotationsachse 18 des Rotors 14. Da insbesondere eine radiale Fixierung bei einem segmentierten Stator 18 mangels einpressen in ein Gehäuse 46 entfallen kann, besteht hier besonders das Problem der Mittenzentrierung und der Luftspalteinstellung. Die Segmente 30, 32 des Stators 16, die zu dem Rotor 14 mit dem eng tolerierten Luftspalt 52 positioniert werden müssen, werden durch ein Exzenterstiftsystem einstellbar ausgerüstet. Die Exzentervorrichtungen 36, 38 40, 42 lassen eine radiale Einstellung zu, die dann durch ein Blockieren der Exzentervorrichtungen 36, 38 40, 42 fest eingestellt werden kann. Zusätzlich erfolgt dann in dieser Position das übliche axiale Verspannen der Statorkomponenten (Statorblöcke) 26, 28 innerhalb des Gehäuses 46 oder der Einbauvorrichtung (nicht gezeigt), wie es heute üblich ist.

In Summe wird dadurch eine elektrische Maschine 10 mit hoher Leistungsdichte und Leistungsfähigkeit und geringen Kosten und Fertigungsaufwänden ermöglicht. Die einzelne Statorkomponente (der einzelne Statorblock) 26, 28 kann mit größeren Toleranzketten hergestellt werden, da es möglich ist, dass er erst final in seiner Luftspaltposition justiert wird.

Die Fig. 2 zeigt ausgewählte Komponenten einer elektrischen Maschine 10, darunter eine Exzentervorrichtung 34 mit Exzenterstift 50 und Exzenterhülsen 48 im beidseitigen Gehäuseeingriff. An dieser Stelle sei noch einmal ausdrücklich darauf hingewiesen, dass - im Gegensatz zur Fig. 1 - nun ein durchaus realistisch dimensionierter Aufbau dargestellt ist.

Der Stator 16 wird durch mehrere, mindestens jedoch zwei, Exzenterstifte 50 zur Montage einstellbar gemacht. Die (als eine Art Doppel-Exzentervorrichtungen ausgebildeten) Exzentervorrichtungen 36, 38, 40, 42 können mit einer durchgehenden Hülse 48 oder mit zwei Hülsen 48, also einer pro Statorseite, ausgeführt werden. Bei kurzen Statoren 16 bietet sich eine Hülse 48 an, bei breiten Statoren 16 bieten sich zwei Hülsen 48 an.

Durch einfaches Drehen der Exzenterhülse 48 in einer entsprechenden Ausnehmung (nicht explizit gezeigt) in der jeweiligen maschinenfesten Komponente 24, 24' wird der Exzenterstift 50 radial verstellt. Es ergibt sich bei zwei Stiften 50 eine radiale Einstellbarkeit der Statorkomponente (des Statorblockes) 26, 28 gegenüber der Mittel- bzw. Rotationsachse 18 des Rotors 14. Damit lässt sich der Stator 16 über den Luftspaltumfang seiner Erstreckung gleichbleibend einstellen, bis sich das gewünschte Maß ergibt.

Nach dem Einstellen erfolgt das axiale Verklemmen des Stators 16 durch Verschrauben oder Verspannen zwischen den Gehäuseelementen des Gehäuses 46. Dieses Klemmen ist dann lasttragend.

Vorteilhafterweise lassen sich die Exzentervorrichtungen 36, 38, 40, 42 durch Klemmvorrichtungen in ihrer rotatorischen Position, die für die radiale Auslenkung verantwortlich sind, fixieren. Dies kann durch Kontermuttern, Madenschraube, ein Verstemmen oder durch Klebstoff erfolgen. Die jeweilige Exzentervorrichtung 36, 38, 40, 42 kann entweder in der Statorkomponente (dem Block) 26, 28 oder im Gehäuse 46 sitzen, durch seine Exzentrizität gegenüber dem Bohrloch und dem inneren Stift 50 erfolgt eine Ausrichtung bei Verdrehung spezifisch zu dem Maß seiner Exzentrizität. Hierzu ist es vorteilhaft, wenn eine Verdrehbarkeit leicht durch eines der üblichen Antriebsprofile wie ein Vier- oder Sechskant 54 erreicht werden kann, auch Schlitze oder andere Form von Facetten wären denkbar (Hakenschlüssel, etc.).

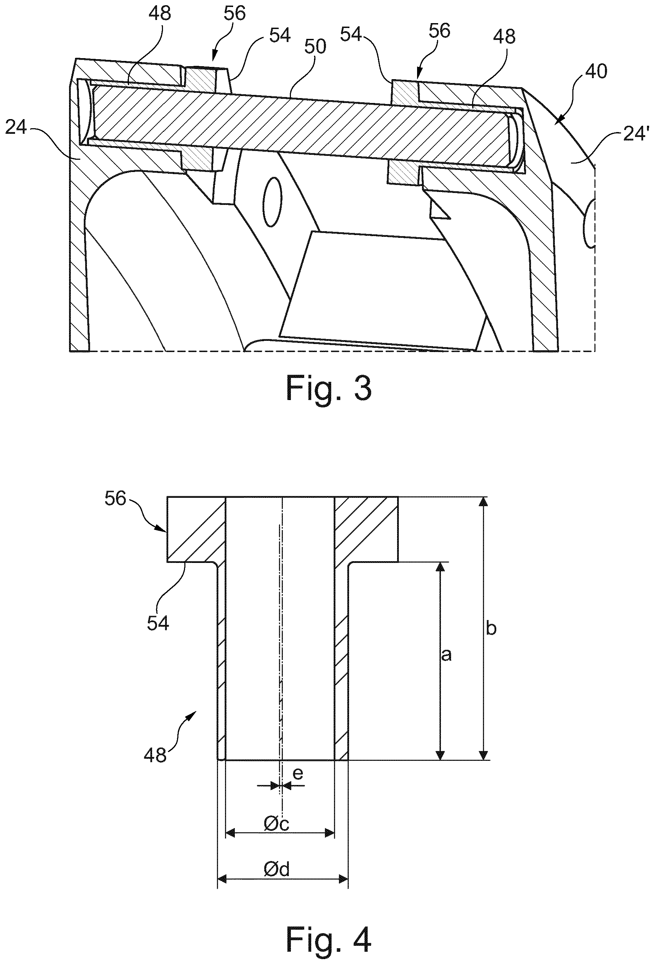

Die Fig. 3 zeigt eine der Exzentervorrichtungen 36 mit ihrem Exzenterstift 50 in einer Detailabbildung. Durch den beidseitigen Einsatz von Exzenterhülsen 48 können lange Statorkomponenten (Statorblöcke) 26, 28 radial unterschiedlich in ihren Enden ausgerichtet werden. Kurze Statoren 16 benötigen oftmals nur eine Exzenterhülse 48, die dann im Stator 16 direkt sitzt und der Exzenterstift 50 ist dann im Gehäuse 46 eingefasst. In vorteilhafter Wirkung ergibt sich eine erheblich größere Fertigungstoleranz für die Bauteile und die Toleranzketten, sowie die Montageketten.

Der Einbau erfolgt einfach über justieren beim Montieren. Die jeweilige Statorkomponente (der Block) 26, 28 wird dann durch die zusätzliche Verschraubung positionsneutral geklemmt, so dass die Tragfunktion nicht von der Exzenterhülse 48 übernommen werden muss, sie hat nur die Funktion der vorherigen Justierung bei der Montage.

Vorteilhafterweise können elektrische Maschinen 10, insbesondere Elektromotoren, gemäß weiterer Vorzüge auch ohne Montagemittel, z.B. auf einer Baustelle vor Ort ausgerichtet werden. Es ist kein größerer Maschineneinsatz dazu nötig, selbst bei hohen Gewichten der Statoren (aufgrund der Übersetzungswirkung).

Die Fig. 4 zeigt eine Exzenterhülse 48 in einer Schnittdarstellung mit Bemaßung. Die dabei gezeigte Exzenterhülse 48 ist in der Praxis bereits erfolgreich verwendet worden. Sie weist an einem Ende 56 den Sechskant 54 auf, während der Rest als reine Hülse ausgebildet ist, die die Länge a von 45 mm (a = 45 mm) aufweist. Insgesamt ergibt sich eine Gesamtlänge b von 60 mm (b = 60 mm). Der Innendurchmesser c der Hülse beträgt 25 mm (c = 25 mm) und der Außendurchmesser d beträgt 30 mm (d = 30 mm). Dabei ergibt sich ein Abstand e der Längsachsen von Innen- und Außendurchmesser von 0,5 mm (e = 0,5 mm). Bezogen auf den Außendurchmesser sind dies e/d = 1/60.

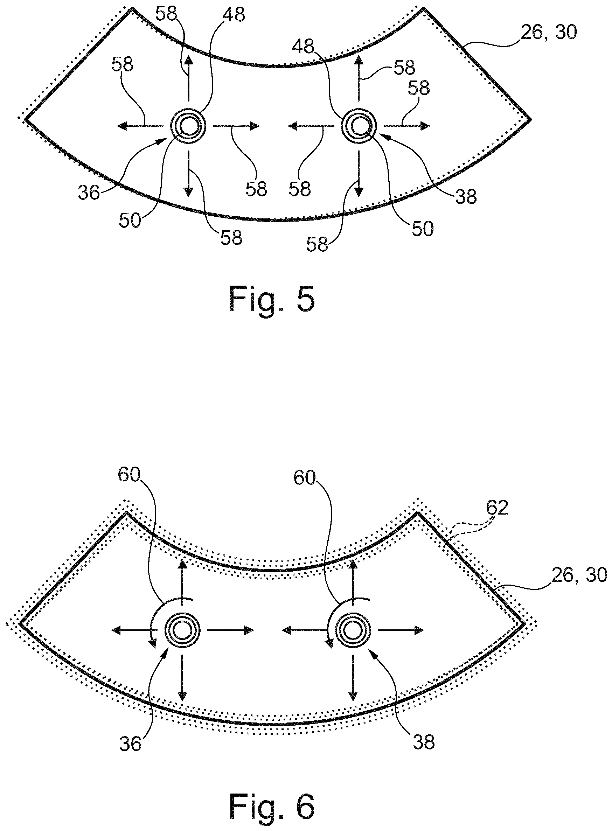

Die Fig. 5 zeigt eine der Statorkomponenten 26 und zwei zugehörige Exzentervorrichtungen 36, 38 der Einstelleinrichtung 34. Pfeile 58 deuten die über die Exzentervorrichtungen 36, 38 realisierbaren Einstellmöglichkeiten an.

Die Fig. 6 zeigt nun die durch drehen der Exzentervorrichtungen 36, 38 in die gleiche Richtung (Pfeile 60) realisierbare Einstellmöglichkeiten bei der in Fig. 5 gezeigten Statorkomponente (gestrichelte Linien 62).

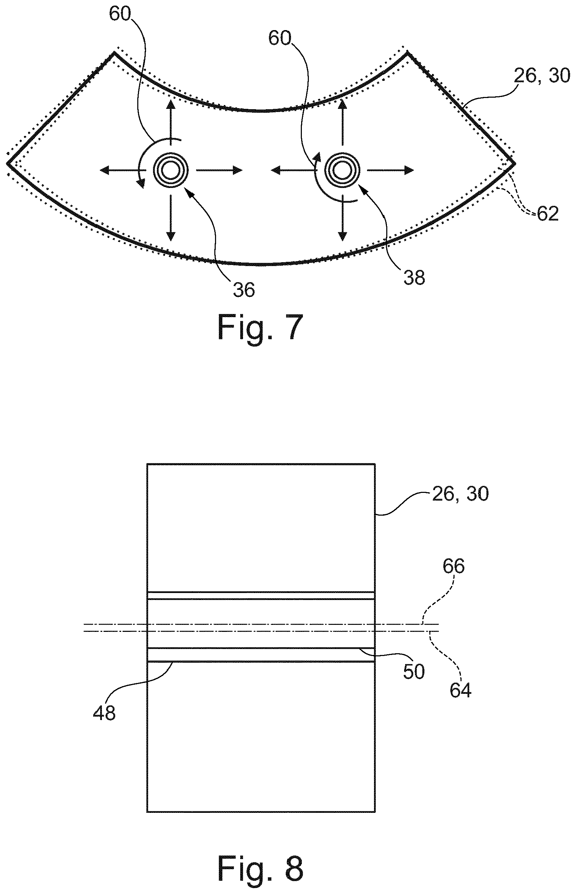

Die Fig. 7 zeigt nun die durch drehen der Exzentervorrichtungen 36, 38 in einander entgegengesetzte Richtungen (Pfeile 60) realisierbare Einstellmöglichkeiten bei der in Fig. 5 gezeigten Statorkomponente (gestrichelte Linien 62).

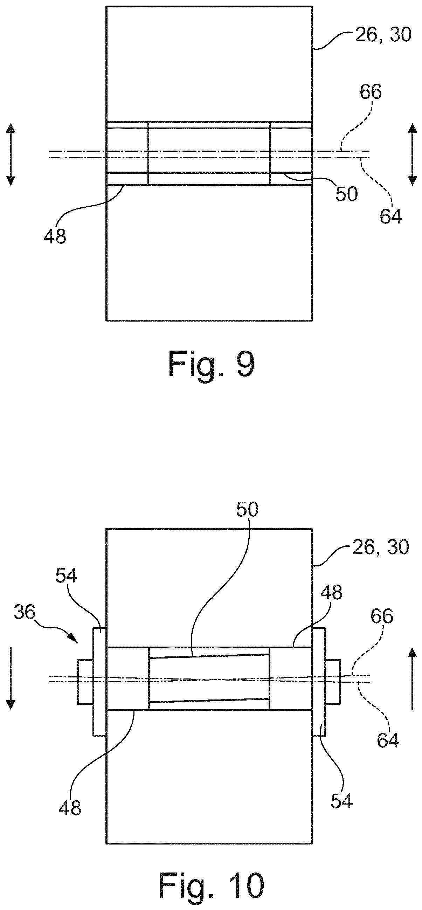

Die Fig. 8 zeigt einen Schnitt durch die Statorkomponente 26 und eine der Exzentervorrichtungen 36 der Fig. 5. Gestrichelt eingezeichnet sind die Längsachsen der Exzenterhülse bzw. der koaxial hintereinander angeordneten Exzenterhülsen (in Fig. 10 explizit gezeigt) 48 und der entsprechenden Exzenterstifte 50.

Die Fig. 9 zeigt die Einstellmöglichkeiten der Fig. 6 bei beidseitiger Lagerung der Statorkomponente 26 über die Exzentervorrichtungen 36, 38, also durch Drehen der Exzentervorrichtungen 36, 38 in die gleiche Richtung (Pfeile 60 in Fig. 6), und

Die Fig. 10 zeigt die weiteren Einstellmöglichkeiten der Fig. 7 bei beidseitiger Lagerung der Statorkomponente 26 über die Exzentervorrichtungen 36, 38, also durch Drehen der Exzentervorrichtungen 36, 38 in einander entgegengesetzte Richtungen (Pfeile 60 in Fig. 7). Die gezeigte Exzentervorrichtung 36 weist einen Exzenterstift 50 und zwei Exzenterhülsen 48 auf. Dabei ist klar erkennbar, dass die Längsachsen 66 des Exzenterstifts 50 gegenüber den Längsachsen 64 der Exzenterhülsen 48 bei der gezeigten Einstellung der Exzentervorrichtung 36 verkippt sind. Auf diese Weise wird auch die axiale Ausrichtung des Stators 16 oder der Statorkomponenten 26, 28 gegenüber der Ausrichtung der maschinenfesten Komponenten 24, 24' bzw. der Rotationsachse 16 des Rotors 14 verkippt.

Bezugzeichen

| | |
|---|---|
| 10 | elektrische Maschine |
| 12 | segmentierte elektrische Maschine |
| 14 | Rotor |
| 16 | Stator |
| 18 | Rotationsachse |
| 20 | Hauptachse |
| 22 | Statorplatte |
| 24, 24' | maschinenfeste Komponente |
| 26, 28 | Statorkomponente |
| 30, 32 | Statorsegment |
| 34 | Einstelleinrichtung |
| 36 - 42 | Exzentervorrichtung |
| 44 | Innenläufer-Maschine |
| 46 | Gehäuse |
| 48 | Exzenterhülse |
| 50 | Exzenterstift |
| 52 | Luftspalt |
| 54 | Sechskant |
| 56 | Ende |
| 58 | Pfeil |
| 60 | Pfeil |
| 62 | gestrichelte Linie |
| 64 | Längsachse der Hülse(n) |
| 66 | Längsachse des Stiftes |
| a - e | Hülsenmaße |
| r | Luftspalt-Abstand |

**Patentansprüche**

1.  Einstelleinrichtung (34) zum Einstellen eines radialen Luftspalt-Abstandes zwischen einem Stator (16) und einem eine Rotationsachse (18) aufweisenden Rotor (14) einer elektrischen Maschine (10), mit Exzentervorrichtungen (36, 38, 40, 42), über die die Lage des Stators (16) oder einzelner Statorkomponenten (26, 28) des Stators (16) bezüglich mindestens einer maschinenfesten Komponente (24) der elektrischen Maschine (10) justierbar ist, **dadurch gekennzeichnet, dass** die Einstelleinrichtung (34) derart eingerichtet ist, dass die Lage eines auf eine mit der Rotationsachse (18) korrespondierende Hauptachse (20) des Stators (16) oder der Statorkomponenten (26, 28) bezogenen und den Luftspalt (52) begrenzenden Statorumfangs mittels der Exzentervorrichtungen (36, 38, 40, 42) einstellbar ist.

2. Einstelleinrichtung nach Anspruch 1, **dadurch gekennzeichnet, dass** pro einzelne Statorkomponente (26, 28) mindestens zwei der Exzentervorrichtungen (36, 38; 40, 42) vorgesehen sind.

3. Einstelleinrichtung nach Anspruch 1 oder 2, **dadurch gekennzeichnet, dass** jede der Exzentervorrichtungen (36, 38; 40, 42) eine Exzenterhülse (48) sowie einen Exzenterstift (50) aufweist.

4. Einstelleinrichtung nach Anspruch 3, **dadurch gekennzeichnet, dass** jede der Exzenterhülsen (48) ein, insbesondere als Sechskant (54) ausgebildetes, Antriebsprofil aufweist.

5. Elektrische Maschine (10), insbesondere segmentierte elektrische Maschine (12), mit einem Rotor (14), der eine Rotationsachse (18) aufweist, einem Stator (16), der eine mit der Rotationsachse (18) korrespondierende Hauptachse (20) aufweist, mindestens einer maschinenfesten Komponente (24) und einer Einstelleinrichtung (34) zum Einstellen eines radialen Luftspalt-Abstandes zwischen dem Stator (16) und dem Rotor (14), die Exzentervorrichtungen (36, 38, 40, 42) aufweist, über die die Lage des Stators (16) oder einzelner Statorkomponenten (26, 28) des Stators (16) bezüglich der mindestens einen maschinenfesten Komponente (24) justierbar ist, **dadurch gekennzeichnet, dass** die Einstelleinrichtung (34) nach einem der Ansprüche 1 bis 4 ausgebildet ist.

6. Elektrische Maschine nach Anspruch 5, **dadurch gekennzeichnet, dass** der Stator (16) oder jede der einzelnen Statorkomponenten (26, 28) zum Einstellen des radialen Luftspalt-Abstandes über mindestens zwei der Exzentervorrichtungen (36, 38; 40, 42) mit der maschinenfesten Komponente (24) bezüglich seiner/ihrer Lage justierbar verbunden ist.

7. Elektrische Maschine nach Anspruch 5 oder 6, **da-**

**durch gekennzeichnet, dass** die maschinenfeste Komponente (24) eine gehäusefeste Komponente, insbesondere ein Gehäuseelement eines Gehäuses (46), der elektrischen Maschine (10) ist.

8. Elektrische Maschine nach einem der Ansprüche 5 bis 7, **dadurch gekennzeichnet, dass** die Statorkomponenten (26, 28) Statorsegmente (30, 32) des Stators (16) der segmentierten elektrischen Maschine (12) sind.

9. Elektrische Maschine nach einem der Ansprüche 5 bis 8, **gekennzeichnet durch** zwei oder mehr maschinenfeste Komponenten (24), wobei eine dieser maschinenfesten Komponenten (24) auf einer Seite und eine andere dieser maschinenfesten Komponenten (24') auf der dieser einen Seite gegenüberliegenden anderen Seite des Stators (16) angeordnet ist und der Stator (16) oder jede der einzelnen Statorkomponenten (26, 28) zum Einstellen des radialen Luftspalt-Abstandes über mindestens über mindestens eine der als Doppel-Exzentervorrichtung ausgebildeten Exzentervorrichtungen (36, 38; 40, 42) mit jeder dieser beiden maschinenfesten Komponente (24) bezüglich seiner/ihrer Lage justierbar verbunden ist.

10. Verfahren zum radialen Einstellen eines Luftspalt-Abstandes zwischen einem Stator (16) und einem Rotor (14) einer elektrischen Maschine (10), insbesondere einer segmentierten elektrischen Maschine (12), nach einem der Ansprüche 5 bis 9, **dadurch gekennzeichnet, dass** der radiale Luftspalt-Abstand zwischen dem Stator (16) und dem Rotor (18) über die Einstelleinrichtung (34) zum Einstellen eines radialen Luftspalt-Abstandes eingestellt wird.

Fig. 1

Fig. 2

Fig. 3

Fig. 4

Fig. 5

Fig. 6

Fig. 7

Fig. 8

Fig. 9

Fig. 10

**Europäisches Patentamt**
**European Patent Office**
**Office européen des brevets**

# EUROPÄISCHER RECHERCHENBERICHT

**Nummer der Anmeldung**

EP 21 15 5404

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2018/113863 A1 (VESTAS WIND SYS AS [DK]) 28. Juni 2018 (2018-06-28) * Abbildungen 1-10 * * Seite 10 - Seite 12 * ----- | 1-10 | INV. H02K15/16 H02K1/18 H02K1/14 |
| A | EP 3 352 334 A1 (SIEMENS AG [DE]) 25. Juli 2018 (2018-07-25) * Abbildungen 1-7 * ----- | 2,8 | |
| A | EP 2 669 531 A1 (SIEMENS AG [DE]) 4. Dezember 2013 (2013-12-04) * Abbildungen 1-4 * ----- | 2,8 | |
| A | US 4 444 365 A (HEUBERGER LAWRENCE K [US]) 24. April 1984 (1984-04-24) * Abbildung 5 * ----- | 4 | |

**RECHERCHIERTE SACHGEBIETE (IPC)**

H02K

Der vorliegende Recherchenbericht wurde für alle Patentansprüche erstellt

| Recherchenort | Abschlußdatum der Recherche | Prüfer |
|---|---|---|
| Den Haag | 18. Juni 2021 | Le Chenadec, Hervé |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
..........................................................................
& : Mitglied der gleichen Patentfamilie, übereinstimmendes
    Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 21 15 5404

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

18-06-2021

| Im Recherchenbericht angeführtes Patentdokument | Datum der Veröffentlichung | Mitglied(er) der Patentfamilie | Datum der Veröffentlichung |
|---|---|---|---|
| WO 2018113863 A1 | 28-06-2018 | KEINE | |
| EP 3352334 A1 | 25-07-2018 | BR 112019011846 A2 | 29-10-2019 |
| | | CN 110192327 A | 30-08-2019 |
| | | EP 3352334 A1 | 25-07-2018 |
| | | EP 3526880 A1 | 21-08-2019 |
| | | US 2019363591 A1 | 28-11-2019 |
| | | WO 2018134043 A1 | 26-07-2018 |
| EP 2669531 A1 | 04-12-2013 | KEINE | |
| US 4444365 A | 24-04-1984 | KEINE | |

Für nähere Einzelheiten zu diesem Anhang : siehe Amtsblatt des Europäischen Patentamts, Nr.12/82

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2960530 A1